# EUROPEAN PATENT SPECIFICATION

(11) **EP 1 803 616 B1**
(45) Date of publication and mention of the grant of the patent: **07.07.2010**
(21) Application number: 06125610.3
(22) Date of filing: 07.12.2006
(51) Int. Cl.: B60R 22/00

(54) **Seat Belt Retractor, Seat Belt Apparatus, and Vehicle with Seat Belt Apparatus**
Sitzgurtaufroller, Sitzgurtvorrichtung, und Fahrzeug mit Sitzgurtvorrichtung
Rétracteur de ceinture de sécurité, appareil de ceinture de sécurité et véhicule équipé dýun appareil de ceinture de sécurité

(30) Priority: 28.12.2005 JP 2005379283; 28.12.2005 JP 2005379292
(43) Date of publication of application: 04.07.2007
(73) Proprietor: TAKATA CORPORATION, Minato-ku, Tokyo 106-8510 (JP)
(72) Inventor: Tanaka, Koji, Minato-ku Tokyo 106-8510 (JP); Inuzuka, Koji, Minato-ku Tokyo 106-8510 (JP)
(74) Representative: Vossius & Partner

(56) References cited:
- EP-A- 0 800 970
- GB-A- 2 153 203
- US-A- 4 572 543
- US-A- 4 966 394

## Description

The present invention relates to a technology for controlling the seat belt tension on a seat belt for occupant restraint, which is installed in a vehicle, by means of driving of an electric motor.

Conventionally, a seat belt apparatus which is designed for restraining a vehicle occupant to a vehicle seat by a seat belt (webbing) which is installed in a vehicle is known. For example, Japanese translation ofPCT international application No. 2003-507252 (Patent Document 1) discloses a structure of a seat belt retractor in which a shaft of a spool is driven to rotate by driving force of an electric motor so as to wind or unwind a seat belt.

In the technology disclosed in Patent Document 1, a structure of the seat belt retractor for a vehicle is proposed in which the driving force of an electric motor is utilized to conduct the action of winding and unwinding the seat belt onto and from the spool. In association with this technology, there is also proposed a technology for adjusting the seat belt tension acting on the seat belt by controlling the driving of the electric motor during running of the vehicle or when a vehicle occupant cancels the wear of the seat belt.
By the way, in seat belt apparatus of this type of utilizing the driving force of the electric motor to conduct the action of winding and unwinding the seat belt, there is a technological requirement for properly controlling the driving of the electric motor even in cases other than when the vehicle runs or when the wearing of the seat belt is cancelled for the purpose of improving the convenience. Inventors pursue the improvement of the convenience of seat belt apparatus of this type in response to the aforementioned requirement and reach a conclusion that the convenience can be improved by suitably adjusting the seat belt tension acting on the seat belt to remove unwanted stress or tightness on a vehicle occupant applied by the seat belt particularly when reversing the vehicle. This is because the vehicle occupant when reversing the vehicle may look back for confirming the safety and such movement may easily increase the seat belt tension so that the vehicle occupant is easy to feel stress or tightness.

US 2005/0146128 A1 discloses in further example of background art a seat belt retractor 600 to be installed in a vehicle comprising:
an electric motor 10;
a spool 3 which is capable of winding and unwinding a seat belt for occupant restraint in association with driving of said electric motor; and
a control means 14 which controls the driving of said electric motor, wherein said control means has a control mode in which when said seat belt is worn by a vehicle occupant and the vehicle is being reversed, said electric motor is inhibited to rewind said spool so as to increase comfort for the occupant.

Accordingly, the object of the present invention is to provide a technology which relates to a structure for controlling the seat belt tension acting on a seat belt for occupant restraint installed in a vehicle by means of driving of an electric motor and which is effective and provides high level of convenience when reversing the vehicle.

For achieving the object, the present invention is made. The present invention can be typically adapted to a seat belt retractor or a seat belt apparatus to be installed in an automobile. In addition, the present invention can be adapted to a technology for developing a seat belt retractor or a seat belt apparatus to be installed in a vehicle other than automobile, such as aircraft, boat, train, bus, and truck.

The first aspect of the present invention for achieving the aforementioned object is a seat belt retractor claimed in claim 1.
The seat belt retractor claimed in claim 1 is a device to be installed in a vehicle and comprises at least an electric motor, a spool, and a control means.

The spool of this invention is a member which is operated in association with driving of the electric motor to wind and unwind a seat belt for occupant restraint. The seat belt capable of being wound onto and unwound from the spool is a long belt to be worn by a vehicle occupant seated in a seat and is sometimes called "webbing". Typically, the vehicle occupant seated in the vehicle seat is restrained by the seat belt when restraint is required such as a vehicle collision. In the present invention, if required, a power transmission mechanism may be suitably disposed between the electric motor and the spool to selectively achieve a connected state where the electric motor and the spool are connected and a disconnected state where the connected state is cancelled.

The control means of the present invention is structured at least as a means for controlling the driving of the electric motor. The control means is typically composed of a CPU (central processing unit), an input/output unit, a storage unit, a peripheral unit, and the like. As for the "controlling the driving of the electric motor "used here, the item to be controlled includes various items such as the operation or stoppage time period of the electric motor, and the value or the supplying time period or the supplying direction of voltage and/or current to be supplied to the electric motor. Therefore, the driving direction (rotating direction), the driving time, the driving force, and the like of the electric motor can be varied. The control means may be provided exclusively for the seat belt retractor of the present invention or used also for other control means for controlling driving system and/or electric system of the vehicle.

By the way, the vehicle occupant when reversing the vehicle may look back for confirming the safety and such movement may easily increase the seat belt tension so that the vehicle occupant is easy to feel stress or tightness due to the seat belt tension. Therefore, the control means of the present invention has at least a control mode in which when the seat belt is worn by a vehicle occupant, i.e. seat belt wearing state, and the vehicle is being reversed, i.e. vehicle reversing state, the electric motor is controlled to rotate the spool to unwind the seat belt so as to reduce the seat belt tension acting on the seat belt. The control mode is performed by the control means when reversing the vehicle, such as just after actually starting the reverse of the vehicle or when the reverse of the vehicle is predicted.

The seat belt wearing state used here is defined when the seat belt buckle is in the ON state or is changed from the OFF state to the ON state. The vehicle reversing state used here is defined when a rear position switch detects that a shift lever of an automatic transmission or a manual transmission is set to a rear position. In the present invention, the seat belt wearing state and the vehicle reversing state can be set as a requirement for starting the seat belt unwinding. It may be employed as a requirement for determining the vehicle reversing state that a vehicle speed sensor detects that the speed of the vehicle is a reversing speed, i.e. a speed at the time when the vehicle is reversed.

In the control mode of the present invention, the electric motor is controlled to rotate the spool to unwind the seat belt so as to reduce the seat belt tension acting on the seat belt. As for the reduction in the seat belt tension used here, typically the electric motor is required to be controlled such that the seat belt tension is reduced to a value lower than that at the start of the control mode. Specific examples are a control for unwinding the seat belt such that the seat belt tension is reduced to a predetermined value, a control for unwinding the seat belt such that the seat belt tension becomes 0 (zero), a control for unwinding the seat belt for a predetermined rotating amount or for a predetermined rotating time, and the like. The action of the spool for reducing the seat belt tension in the control mode should include at least an unwinding action and may employ a control for continuing the unwinding action sequentially or intermittently or a control in which the unwinding action is combined with the winding action.

According to the seat belt retractor as claimed in claim 1, there is provided a seat belt retractor which is effective and provides high level of convenience when reversing the vehicle. Specifically, while the vehicle occupant when reversing the vehicle may look back for confirming the safety, the seat belt tension acting on the vehicle occupant when reversing the vehicle can be reduced so that the stress felt by the vehicle occupant can be eliminated or reduced. By eliminating or reducing the stress felt by the vehicle occupant due to the seat belt, a strong impression as sophisticated seat belt control is given to the vehicle occupant, thereby improving the seat belt wearing rate and thus reducing the provability of accidents.

The second aspect of the present invention for achieving the aforementioned object is a seat belt retractor claimed in claim 2.
In the seat belt retractor claimed in claim 2, the control means as claimed in claim 1 in said control mode controls the driving of the motor to form an insensitive region relating to restraining force applied on the vehicle occupant by the seat belt. The insensitive region used here is formed by reducing the seat belt tension to the extent that the vehicle occupant does not feel the restraining force from the seat belt or to the extent not to disturb the movement of the vehicle occupant. Typically, the insensitive region is formed by controlling the driving of the electric motor in such a manner that the seat belt tension becomes generally 0 (zero) or the seat belt becomes loosened.

According to the aforementioned structure of the seat belt retractor claimed in claim 2, the stress felt by the vehicle occupant due to the seat belt can be reliably eliminated and the seat belt is prevented from disturbing the movement of the vehicle occupant when reversing the vehicle.

The third aspect of the present invention for achieving the aforementioned object is a seat belt apparatus claimed in claim 3.
The seat belt apparatus claimed in claim 3 is an apparatus to be installed in a vehicle and comprises at least a seat belt for occupant restraint, an electric motor, a spool, a control means, a seat belt buckle, a tongue, and a buckle detection sensor.

The seat belt of the present invention is a long belt to be worn by a vehicle occupant seated in a seat and is sometimes called "webbing". Typically, the vehicle occupant seated in the vehicle seat is restrained by the seat belt when restraint is required such as a vehicle collision. The seat belt buckle of the present invention is a member fixed to a vehicle body. The tongue of the present invention is a member which is attached to the seat belt and is latched to the seat belt buckle when the seat belt is worn by the vehicle occupant. The buckle detection sensor of the present invention is a means for detecting that the tongue is latched to the seat belt buckle. The electric motor and the spool of this invention have substantially the same functions as those of the seat belt retractor claimed in claim 1. The control means of the present invention determines that the unwinding starting condition is satisfied when the seat belt is worn by a vehicle occupant, i.e. the seat belt wearing state based on the detected information of the buckle detection sensor, and the vehicle is being reversed, the electric motor is controlled to unwind the seat belt in a predetermined mode.

According to the seat belt apparatus as claimed in claim 3, there is provided a seat belt apparatus which is effective and provides high level of convenience when reversing the vehicle. Specifically, there is provided a seat belt apparatus in which the seat belt tension acting on the vehicle occupant via the seat belt when reversing the vehicle can be reduced so that the stress felt by the vehicle occupant can be eliminated or reduced. By eliminating or reducing the stress from the seat belt felt by the vehicle occupant, a strong impression as sophisticated seat belt control is given to the vehicle occupant, thereby improving the seat belt wearing rate and thus reducing the provability of accidents.

The fourth aspect of the present invention for achieving the aforementioned object is a seat belt apparatus claimed in claim 4.
In the seat belt apparatus claimed in claim 4, the control means as claimed in claim 3 in said control mode controls the driving of the motor to form an insensitive region relating to restraining force applied on the vehicle occupant by the seat belt. The control means of this invention has the same structure as the control means of the seat belt retractor claimed in claim 2.

According to the aforementioned structure of the seat belt apparatus claimed in claim 4, the stress felt by the vehicle occupant due to the seat belt can be reliably eliminated and the seat belt is prevented from disturbing the movement of the vehicle occupant when reversing the vehicle.

The fifth aspect of the present invention for achieving the aforementioned object is a vehicle with a seat belt apparatus claimed in claim 5.
The vehicle with a seat belt apparatus claimed in claim 5 is a vehicle comprising at least a seat belt apparatus as claimed in claim 3 or claim 4. In the vehicle with the seat belt apparatus of the present invention, all of or a part of components of the seat belt apparatus are accommodated in an accommodating space in the vehicle such as an accommodating space in a pillar, an accommodating space in a seat, or an accommodating space in another part of the vehicle. The vehicle with a seat belt apparatus of this invention further comprises a setting apparatus and a detecting means. The setting apparatus of this invention is set to a reverse setting state by the vehicle occupant when reversing the vehicle. As the structure of the setting apparatus, a transmission of which a shift lever is manipulated by the vehicle occupant when reversing the vehicle may be employed. The detecting means of this invention is a means for detecting that the setting apparatus is set to the reverse setting state. As the structure of the detecting means, a switch or a sensor for detecting that the shin lever of the transmission is set to the reverse setting position. The control means of the seat belt apparatus determines that the vehicle is being reversed when the detecting means detects that the setting apparatus is set to the reverse setting state and controls the seat belt tension acting on said seat belt to be lower than the seat belt tension at the time when said detecting means detects that setting apparatus is set to the reverse setting state.

According to the invention as claimed in claim 5, there is provided a vehicle with a seat belt apparatus which is effective and provides high level of convenience when reversing the vehicle.

As mentioned above, the present invention enables to provide a technology relating to a structure in which seat belt tension acting on a seat belt for occupant restraint installed in a vehicle is controlled by means of driving of an electric motor and which is effective and provides high level of convenience when the vehicle is reversed, by employing a structure which controls the driving of the electric motor to rotate a spool to unwind the seat belt so as to reduce the seat belt tension acting on the seat belt when the seat belt is worn by a vehicle occupant and the vehicle is reversed.

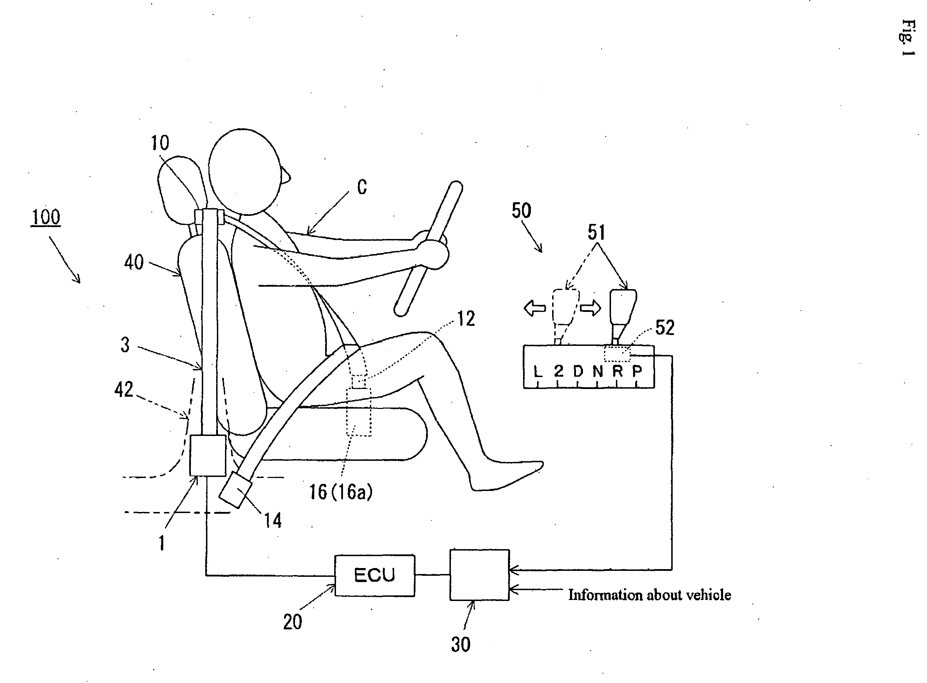

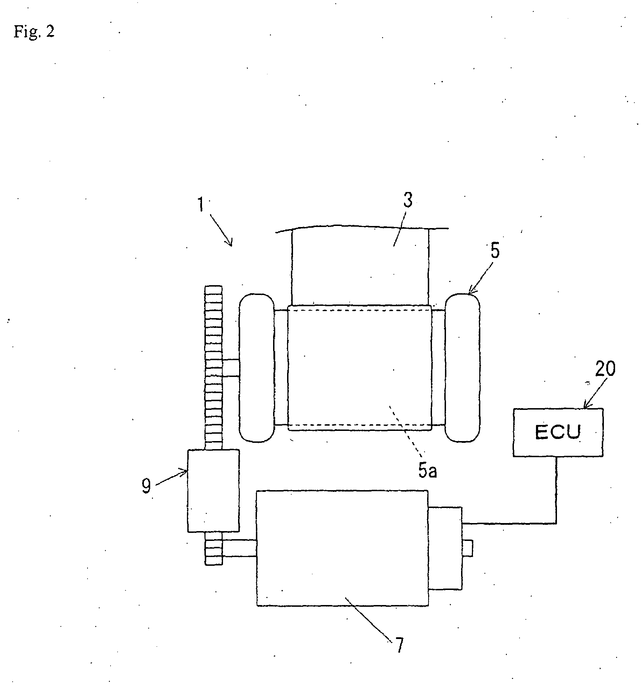

Hereinafter, embodiments of the present invention will be described in detail with reference to drawings.
Fig. 1 is an illustration schematically showing the structure of a seat belt apparatus 100 according to an embodiment.
Fig. 2 is an illustration showing the schematic structure of a seat belt retractor 1 shown in Fig. 1; and
Fig. 3 is a flow chart for the "reversing seat belt control process" relating to the reversing belt-unwinding mode of this embodiment.
First, description will be made as regard to a seat belt apparatus 100 as an embodiment of "seat belt apparatus" of the present invention with reference to Fig. 1 and Fig. 2. Fig. 1 is an illustration schematically showing the structure of the seat belt apparatus 100 of this embodiment. Fig. 2 is an illustration showing the schematic structure of a seat belt retractor 1 shown in Fig. 1.

As shown in Fig. 1, the seat belt apparatus 100 of this embodiment is a seat belt apparatus for a vehicle, which is installed in an automotive vehicle as "vehicle with the seat belt apparatus" of the present invention and mainly comprises a seat belt retractor 1, a seat belt 3, a deflection fitting 10, a tongue 12, an outer anchor 14, a seat belt buckle 16, and an ECU 20. In addition, an input element 30 is installed in the vehicle to detect information about collision prediction or collision occurrence of the vehicle, information about the driving state of the vehicle, information about the sitting position and the body size of a vehicle occupant seated in a seat, information about the open-close state of a vehicle door, information about traffic conditions around the vehicle, information about weather condition and about time zone, and the like and to input such detected information to the ECU 20. The detected information of the input element 30 is transmitted to the ECU 20 anytime or at predetermined intervals and is used for the operation control of the seat belt apparatus 100 and the like.

In this embodiment particularly, the input element 30 is connected to a rear position switch 52 of a transmission 50. The rear position switch 52 is a switch for detecting that a shift l ever 51 is set to a rear position (the position indicated by "R" in Fig. 1) by manual operation of a driver for reversing the vehicle. Though the shift lever 51 shown in Fig. 1 is a shift lever for an automatic transmission which is installed in an automatic car, in the present invention, a switch may be employed which detects that the shift lever is set to the rear position of a manual transmission which is installed in a non-automatic car.

The transmission 50 in which the shift lever 51 is set to the rear position by manual operation of the driver for reversing the vehicle composes "the setting apparatus which is set to the reverse setting state by a vehicle occupant for reversing the vehicle" of the present invention. The rear position switch 52 which detects that the shift lever 51 of the transmission 50 is set to the rear position composes "the detecting means for detecting that the setting apparatus is set to the rear setting state" of the present invention.

The seat belt 3 is a long belt (webbing) to be used for restraining a vehicle occupant C (sometimes referred to as "driver") seated in a vehicle seat 40 as a driver seat. The seat belt 3 corresponds to the "seat belt for occupant restraint" of the present invention. The seat belt 3 is withdrawn from the seat belt retractor 1 fixed relative to the vehicle and extends through a deflection fitting 10 provided around an area about the shoulder of the vehicle occupant C and is connected to an outer anchor 14 through a tongue 12. The deflection fitting 10 has a function of holding the seat belt 3 to the area about the shoulder of the occupant C and guiding the seat belt 3. By inserting the tongue 12 to a seat belt buckle 16 fixed to the vehicle body, the seat belt 3 becomes into the state worn by the vehicle occupant C. The tongue 12 corresponds to the "tongue" of the present invention and the seat belt buckle 16 to which the tongue 12 can be latched corresponds to the "seat belt buckle" of the present invention.

The seat belt buckle 16 has a built-in buckle switch 16a. The buckle switch 16a is adapted to detect that the tongue 12 is inserted into the seat belt buckle 16. The information detected by the buckle switch 16a is transmitted to the ECU 20 which determines whether the seat belt 3 is in the worn state or in the wearing-cancelled state. Specifically, when the buckle switch 16a detects buckle ON operation, the ECU 20 determines that the seat belt 3 becomes into the worn state. On the other hand, when the buckle switch 16a detects buckle OFF operation, the ECU 20 determines that the seat belt 3 becomes into the wearing-cancelled state. The buckle switch 16a corresponds to the "buckle detection sensor for detecting that the tongue is latched to the seat belt buckle" of the present invention.

The seat belt retractor 1 is a device capable of performing the action of winding or unwinding the seat belt 3 via a spool 5 and a motor 7 as will be described later. The seat belt retractor 1 corresponds to the "seat belt retractor" of the present invention. The seat belt retractor 1 is installed in an accommodating space in a B-pillar 42 of the vehicle in the embodiment shown in Fig. 1. The seat belt retractor 1 may be installed in another accommodating space, for example, in a vehicle seat a side roof rail, and the like.

The ECU 20 has a function of conducting the control of the seat belt retractor 1 and other operational mechanisms based on the input signals from the input element 30 and comprises a CPU (Central Processing Unit), an input/output unit, a storage unit, a peripheral unit, and the like. Particularly in this embodiment, the ECU 20 controls the motor 7, as will be described later, of the seat belt retractor 1. Specifically, the ECU 20 controls the voltage and current value supplied to an electromagnetic coil of the motor 7 and the direction of the current supply so as to vary the rotational speed, the rotational direction, the rotational period of time, and the rotational torque (output) of a shaft of the motor 7. The ECU 20 is structured as a means for controlling the driving of the motor 7 and also as a means for controlling a power transmission mechanism 9, as will be described later, to switch between the state where the power of the motor 7 is transmitted to the spool 5 and the state where the power is not transmitted to the spool 5. The ECU 20 corresponds to the "control means" of the present invention. The ECU 20 may be exclusive to the seat belt retractor 1 or used also for other control means for controlling driving system and/or electric system.

As shown in Fig. 2, the seat belt retractor 1 is mainly composed of the spool 5, the motor 7, and the power transmission mechanism 9. The aforementioned ECU 20 may be a component of the seat belt retractor 1.

The spool 5 is formed in a columnar or cylindrical shape of which outer periphery (seat belt contact face) functions as the wind-up surface on which the seat belt 3 is wound. The spool 5 performs the action of winding the seat belt 3 onto the wind-up surface 5a by rotating in the seat belt winding direction and also performs the action of unwinding the seat belt 3 from the wind-up surface 5a by rotating in the seat belt unwinding direction. The spool 5 corresponds to the "spool" of the present invention.

The motor 7 is structured as an electric motor and is adapted to transmit power to the spool 5 through the power transmission mechanism 9. The motor 7 rotates in such a direction that the spool 5 performs the action of winding the seat belt 3 when the motor is controlled to rotate in the seat belt winding direction, while the motor 7 rotates in such a direction that the spool 5 performs the action of unwinding the seat belt 3 when the motor is controlled to rotate in the seat belt unwinding direction. The motor 7 corresponds to "electric motor" of the present invention.

The power transmission mechanism 9 is arranged between the spool 5 and the motor 7 and is structured as a mechanism capable of taking a connected state where the spool 5 and the motor 7 are connected (power transmission operation mode) and a disconnected state where the connected state is cancelled (power transmission disconnection mode). The power transmission mechanism 9 is sometimes referred to as so-called "clutch" which are composed of a combination of gears. The connected state of the power transmission mechanism 9 is a state where the power of the motor 7 is allowed to be transmitted to the spool via the power transmission mechanism 9. When the motor 7 is controlled to rotate in this connected state, the power of the motor 7 is transmitted to the spool 5 via the power transmission mechanism 9. During this, the rotational speed of the motor 7 is reduced by the power transmission mechanism 9. On the other hand, in the disconnected state of the power transmission mechanism 9, the physical connection between the spool 5 and the motor 7 is cancelled so as to allow the easy unwinding (withdrawing) of the seat belt 3 from the spool 5 manually. It should be noted that the spool 5 and the motor 7 may be directly connected without the power transmission mechanism 9 between the spool 5 and the motor 7, if required.

In this embodiment, the power transmission mechanism 9 is constructed as a so-called "single-stage clutch", but not illustrated. Accordingly, when the motor 7 is controlled to rotate with a predetermined motor output in the power transmission operation mode of the power transmission mechanism 9, the rotation of the motor 7 is transmitted to the spool 5 with the rotational speed being reduced so that the spool 5 is driven to rotate with predetermined torque at predetermined rotational speed. Instead of the power transmission mechanism 9, a power transmission mechanism capable of changing the rotational torque and the rotational speed of the spool into several stages may be employed. For example, in case of a two-stage clutch capable of changing the rotational torque and the rotational speed of the spool into two stages, the power transmission mechanism can be set in a high-reduction ratio mode with relatively high rotational torque and relatively low rotational speed in order to respond to a need for winding of the seat belt onto the spool with large belt tension. On the other hand, the power transmission mechanism can be set in a low-reduction ratio mode with relatively low rotational torque and relatively high rotational speed in order to respond to a need for rapid winding of the seat belt onto the spool.

In this embodiment, the seat belt retractor 1 of this embodiment has the following eight seat belt control modes relating to the state of the seat belt 3. Based on these seat belt control modes, the control of the motor 7 and the power transmission mechanism 9 are performed by the ECU 20. Another seat belt control mode may be added to these seat belt control modes.

### (1) Belt storage mode

Belt storage mode is a control mode in which the seat belt 3 is not used and fully wound onto the spool 5. In the seat belt retractor 1 in the belt storage mode, the motor 7 is not activated and the power transmission mechanism 9 is set to the power transmission disconnection mode. Therefore, only very weak belt tension is applied to the seat belt 3 and the power consumption is zero.

### (2) Belt withdrawing mode

Belt withdrawing mode is a control mode in which the seat belt 3 is withdrawn from the spool 5 so as to be worn by the occupant. The seat belt retractor 1 in the belt withdrawing mode is also set in the power transmission disconnection mode. Therefore, the seat belt 3 can be withdrawn manually with small force. Also in this case, the motor 7 is not activated so that the power consumption is zero.

### (3) Belt winding and fitting mode

Belt winding and fitting mode is a control mode in which after the seat belt 3 is withdrawn and the tongue (the tongue 12 in Fig. 1) is inserted into and latched with the seat belt buckle to turn ON the buckle switch (the buckle switch 16a in Fig. 1), excessively withdrawn part of the seat belt 3 is wound in order to fit the seat belt 3 to the occupant and a control mode in which when the occupant moves so as to withdraw a predetermined amount of the seat belt 3 from the normally used state of the seat belt 3 (at this point, the buckle switch is in the ON state) and then the occupant returns to the original position, the withdrawn part of the seat belt 3 is wound. In the seat belt retractor 1 in the belt winding and fitting mode, the power transmission mechanism 9 is set to the power transmission operation mode and the motor 7 is controlled to rotate at high rotational speed in the belt winding direction. Therefore, the seat belt 3 is rapidly wound onto the spool 5 and then the motor 7 is stopped when very small predetermined belt tension is generated, whereby the seat belt 3 is worn by and fitted to the occupant.

### (4) Normal wearing mode (comfortable mode)

Normal wearing mode (comfortable mode) is a control mode in which the occupant wears the seat belt 3 in the normal state after the belt winding and fitting mode is terminated. In the seat belt retractor 1 in the normal wearing mode, the motor 7 is not activated and the power transmission mechanism 9 is set in the power transmission disconnection mode. Therefore, only very weak belt tension is applied to the seat belt 3 so that the vehicle occupant can wear the seat belt 3 without any stress. In addition, the power consumption is zero.

### (5) Warning mode

Warning mode is a control mode in which when the system detects dozing of the driver during running or detects an obstacle around the vehicle when the vehicle is running and the seat belt is in the normal wearing mode, the seat belt 3 is wound repeatedly predetermined times so as to warn the driver. In the seat belt retractor 1 in the warning mode, the motor 7 is controlled to be alternately activated and stopped several times. Therefore, the operation of applying relatively strong belt tension (which is weaker than that of the belt tension during the emergency mode as will be described later) and very weak belt tension onto the seat belt 3 is alternately repeated, thereby drawing the driver's attention to the dozing and the obstacle around the vehicle.

### (6) Emergency mode

Emergency mode is a control mode which is set when the vehicle extremely likely has a collision with an obstacle or the like during running in the normal wearing mode or following the aforementioned warning mode. In the seat belt retractor 1 in the emergency mode, the power transmission mechanism 9 is set in the power transmission operation mode and the motor 7 is controlled to rotate at high rotational speed with high rotational torque in the belt winding direction. Therefore, the motor 7 is stopped when predetermined extremely strong belt tension is generated on the seat belt 3 after the seat belt 3 is rapidly wound onto the spool 5, thereby securely restraining the vehicle occupant with the seat belt 3.

### (7) Belt winding and storing mode

Belt winding and storing mode is a control mode in which the seat belt 3 is fully wound to be in the storage state. In the seat belt retractor 1 in the belt winding and storing mode, the power transmission mechanism 9 is set to the power transmission operation mode and the motor 7 is controlled to rotate in the belt winding direction so as to wind up the seat belt onto the spool 5. Consequently, the action of rapidly winding the withdrawn seat belt 3 onto the spool 5, that is, "seat belt storage winding action" is conducted, thereby preventing the seat belt 3 from being kept in the unwound state from the spool 5. Thus, the motor 7 is stopped when the seat belt 3 is fully wound and a predetermined belt tension which is very weak is generated, whereby the seat belt 3 becomes to the belt storage mode in which the aforementioned very weak belt tension is applied to the seat belt 3.

### (8) Reversing belt-unwinding mode

Reversing belt-unwinding mode is a control mode in which the seat belt tension acting on the seat belt 3 is reduced for preventing the vehicle occupant (particularly a driver) from being subjected to stress when the vehicle is reversed such as just after actual reversing of the vehicle or when the reversing of the vehicle is predicted. In the seat belt retractor 1 in the reversing belt-unwinding mode, the power transmission mechanism 9 is set to the power transmission operation mode and the motor 7 is controlled to rotate in the belt unwinding direction so as to unwind the seat belt from the spool 5. The reversing belt-unwinding mode corresponds to the "control mode" of the present invention.

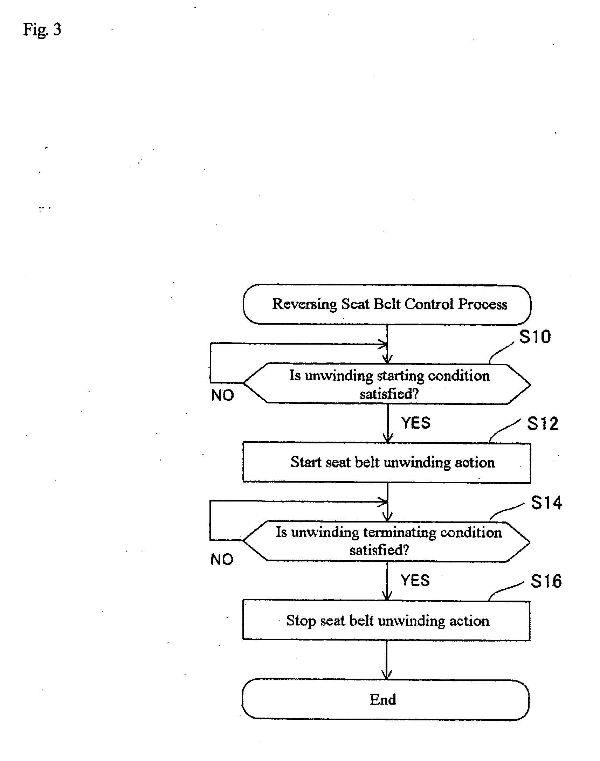

Further detailed description of the aforementioned reversing belt-unwinding mode will be made with reference to Fig. 3. Fig. 3 is a flow chart for the "reversing seat belt control process" relating to the reversing belt-unwinding mode of this embodiment.

In the reversing seat belt control process of this embodiment as shown in Fig. 3, in step S10, it is determined whether or not the unwinding starting condition is satisfied. When the vehicle occupant (the driver C in Fig. 1) wears the seat belt 3, i.e. the seat belt wearing state, and the vehicle is reversed, i.e. the vehicle reversing state, it is determined that the unwinding starting condition is satisfied.

The seat belt wearing state is defined when the buckle switch 16a detects or detected that the tongue 12 is latched to the seat belt buckle 16 shown in Fig. 1, that is, when the seat belt buckle is in the ON state or is changed from the OFF state to the ON state. The vehicle reversing state (vehicle backing state) is defined when the rear position switch 52 detects that the shift lever 51 is set to the rear position as shown in Fig.1. It may be employed as a requirement for determining the vehicle reversing state that a vehicle speed sensor detects that the speed of the vehicle is a reversing speed, i.e. a speed at the time when the vehicle is reversed.

When it is determined that the unwinding starting condition is satisfied in step S10 (YES in step S10), the action of unwinding the seat belt (seat belt unwinding action) is started in step S12. In step S12, the power transmission mechanism 9 of the seat belt retractor 1 is set in the power transmission operation mode and the motor 7 is controlled to rotate the spool 5 to unwind the seat belt in the predetermined mode. Specifically, the voltage or current value supplied to the magnet coil of the motor 7 and the current supplying direction are controlled. The seat belt unwinding action may be continuous or intermittent. The "predetermined mode" stated above includes a first mode in which the seat belt is unwound until the spool 5 is rotated a predetermined rotating amount or for a predetermined rotating time period, a second mode in which the seat belt is unwound until the motor current value indicating the load of the motor 7 is lowered to a predetermined current value, or a third mode in which the seat belt is unwound until the seat belt tension acting on the seat belt 3 is lowered to a predetermined tension value. The predetermined current value for the second mode and the predetermined tension value for the third mode should be lower than that when the seat belt unwinding action is started and may be a positive number or 0 (zero).

In these modes relating to the seat belt unwinding action, it is preferable that the motor 7 is controlled to form an insensitive region relating to the restraining force applied on the vehicle occupant C by the seat belt 3. The "insensitive region" is formed by reducing the seat belt tension to the extent that the vehicle occupant C does not feel the restraining force from the seat belt 3 or to the extent not to disturb the movement of the vehicle occupant C. Typically, the insensitive region is formed by controlling the driving of the electric motor in such a manner that the seat belt tension becomes generally 0 (zero) or the seat belt 3 becomes loosened.

When the seat belt unwinding action is terminated or when the buckle switch 16a detects that the latching of the tongue 12 relative to the seat belt buckle 16 is cancelled during the seat belt unwinding action, it is determined that the unwinding terminating condition is satisfied in step S14 (YES in step S14) and the seat belt unwinding action is stopped in step S16. In step S16, the motor 7 is controlled to be stopped. In this case, the power transmission mechanism 9 of the seat belt retractor 1 may be kept in the power transmission operation mode or may be switched to the power transmission disconnection mode. The termination of step S16 represents the termination of the reversing seat belt control process.

The action of the spool 5 for reducing the seat belt tension in the aforementioned reversing seat belt control process should include at least an unwinding action and may be a control for continuing the unwinding action sequentially or intermittently or a control in which the unwinding action is combined with the winding action.

The vehicle occupant C when the vehicle is reversed may look back for confirming the safety. According to the reversing belt-unwinding mode (the reversing seat belt control process) as mentioned above, the seat belt tension acting on the vehicle occupant C when the vehicle is reversed can be reduced so that the stress felt by the vehicle occupant C can be eliminated or reduced. By controlling the motor 7 to make the seat belt tension become 0 (zero) or make the seat belt 3 loosened, the seat belt tension is reduced to the extent that the vehicle occupant C does not feel the restraining force from the seat belt 3 or to the extent not to disturb the movement of the vehicle occupant C, thereby securely eliminating the stress felt by the vehicle occupant C due to the seat belt 3and preventing the movement of the vehicle occupant C from being disturbed by the seat belt 3.
By eliminating or reducing the stress felt by the vehicle occupant C due to the seat belt 3, a strong impression as sophisticated seat belt control is given to the vehicle occupant C, thereby improving the seat belt wearing rate and thus reducing the provability of accidents.
According to the embodiment, there is provided a seat belt retractor 1, a seat belt apparatus 100, and a vehicle with the seat belt apparatus 100, in which the seat belt tension acting on the seat belt 3 can be suitably adjusted by controlling the motor 7 when the vehicle is reversed, thereby providing high level of convenience.

### (Another embodiment)

The present invention is not limited to the aforementioned embodiments, so various variations and modifications may be made. For example, the following embodiments as variations of the aforementioned embodiment may be carried out.

Though the above embodiment has been described with regard to the seat belt apparatus 100 for the vehicle occupant seated in the driver seat, the present invention can be adapted to seat belt apparatuses for vehicle occupants seated in vehicle seats other than the driver seat, such as a front passenger seat and a rear seat located behind the driver seat and the front passenger seat.

Though the above embodiments have been described with regard to the seat belt retractor 1 and the seat belt apparatus 100 to be installed in an automobile, the arrangement of the seat belt retractor of the present invention can be adapted to seat belt retractors and seat belt apparatuses to be installed in vehicles for transport of vehicle occupants such as automobile, aircraft, boat, train, bus, and truck. In addition, the vehicle in the present invention includes gasoline-powered car, diesel-powered car, hybrid (gas-and-electric-powered) car, fuel-cell car, and electric car, as categorized by engine type, and manual transmission car, automatic car, and CVT car, as categorized by transmission type.

## Claims

1. A seat belt retractor to be installed in a vehicle comprising:
an electric motor (7);
a spool (5) which is capable of winding and unwinding a seat belt (3) for occupant restraint in association with driving of said electric motor; and
a control means (20) which controls the driving of said electric motor, wherein
said control means has a control mode in which when said seat belt is worn by a vehicle occupant and the vehicle is being reversed, said electric motor is controlled to rotate said spool to unwind the seat belt so as to reduce seat belt tension acting on the seat belt.

2. A seat belt retractor as claimed in claim 1, wherein
said control means in said control mode controls the driving of the motor to form an insensitive region relating to restraining force applied on the vehicle occupant by said seat belt.

3. A seat belt apparatus to be installed in a vehicle comprising:
a seat belt retractor as claimed in claim 1 or 2,
a seat belt (3) for occupant restraint which can be worn by a vehicle occupant;
a seat belt buckle (16) fixed to the vehicle,
a tongue (12) which is attached to said seat belt and is latched to said seat belt buckle when said seat belt is worn, and
a buckle detection sensor (16a) for detecting that said tongue is latched to said seat belt buckle, wherein
said control means has a control mode in which when it is determined based on the detected information of said buckle detection sensor that said seat belt is worn by a vehicle occupant and the vehicle is being reversed, said electric motor is controlled to rotate said spool to unwind the seat belt so as to reduce seat belt tension acting on the seat belt.

4. A seat belt apparatus as claimed in claim 3, wherein
said control means in said control mode controls the driving of the motor to form an insensitive region relating to restraining force applied on the vehicle occupant by said seat belt.

5. A vehicle comprising a seat belt apparatus (100) as claimed in claim 3 or claim 4 and further comprising a setting apparatus (50) which is set to a reverse setting state by the vehicle occupant when reversing the vehicle, and a detecting means (52) for detecting that said setting apparatus is set to the reverse setting state, wherein
said control means of said seat belt apparatus is adapted to determine that said vehicle is being reversed when said detecting means detects that said setting apparatus is set to the reverse setting state and controls in said control mode the seat belt tension acting on said seat belt to be lower than the seat belt tension at the time when it is detected that setting apparatus is set to the reverse setting state.

## Patentansprüche

1. Sitzgurtaufroller zum Einbau in ein Fahrzeug mit:
einem Elektromotor (7);
einer Spule (5) zum Aufwickeln und Abwickeln eines Sitzgurtes (3) zum Zurückhalten eines Insassen in Verbindung mit dem Betrieb des Elektromotors; und
einer Steuereinrichtung (20), die den Betrieb des Elektromotors steuert, wobei
die Steuereinrichtung einen Steuermodus hat, in welchem, wenn der Fahrzeuginsasse den Sitzgurt angelegt hat und das Fahrzeug rückwärts fährt, der Elektromotor so gesteuert wird, dass er die Spule zum Abwickeln des Sitzgurtes dreht, wobei eine auf den Sitzgurt wirkende Spannung verringert wird.

2. Sitzgurtaufroller nach Anspruch 1, wobei
die Steuereinrichtung im Steuermodus den Betrieb des Elektromotors unter Ausbildung eines unsensiblen Bereiches bezüglich der auf den Fahrzeuginsassen durch den Sitzgurt ausgeübten Rückhaltekraft steuert.

3. Sitzgurtvorrichung zum Einbau in ein Fahrzeug mit:
einem Sitzgurtaufroller nach Anspruch 1 oder 2,
einem Sitzgurt (3) zum Insassenrückhalt, der von einem Fahrzeuginsassen angelegt werden kann;
einem am Fahrzeug befestigten Gurtschloss (16),
einer am Sitzgurt befestigten Gurtzunge (12), die im Gurtschloss eingerastet ist, wenn der Sitzgurt angelegt ist, und
einem Gurtschlosserkennungssensor (16a) zum Erkennen, dass die Gurtzunge im Gurtschloss eingerastet ist,
wobei
die Steuereinrichtung einen Steuermodus hat, in welchem, wenn auf Basis der vom Gurtschlosserkennungssensor (16a) erfassten Information erkannt wurde, dass der Sitzgurt vom Fahrzeuginsassen angelegt wurde und das Fahrzeug rückwärts fährt, der Elektromotor so gesteuert wird, dass er die Spule zum Abwickeln des Sitzgurtes dreht, wobei eine auf den Sitzgurt wirkende Spannung verringert wird.

4. Sitzgurtvorrichtung nach Anspruch 3, wobei,
die Steuereinrichtung im Steuermodus den Betrieb des Elektromotors unter Ausbildung eines unsensiblen Bereiches bezüglich der auf den Fahrzeuginsassen durch den Sitzgurt ausgeübten Rückhaltekraft steuert.

5. Fahrzeug mit einer Sitzgurtvorrichtung (100) nach Anspruch 3 oder 4 und ferner mit einer Einstelleinrichtung (50), die vom Fahrzeuginsassen auf einen Rücksetz-Zustand gesetzt wird, wenn das Fahrzeug rückwärts fährt, und einer Erkennungseinrichtung (52) zum Erkennen des Rücksetz-Zustands der Einstelleinrichtung, wobei
die Steuereinrichtung der Sitzgurtvorrichtung feststellen kann, dass das Fahrzeug rückwärts fährt, wenn die Erkennungseinrichtung erkennt, dass die Einstelleinrichtung in den Rücksetz-Zustand gesetzt ist, und im Steuermodus zum Zeitpunkt, wenn erkannt wird, dass die Einstellseinrichtung in den Rücksetz-Zustand gesetzt ist, die auf den Sitzgurt wirkende Spannung so steuert, dass sie niedriger als die Sitzgurtspannung ist.

## Revendications

1. Enrouleur de ceinture de sécurité pour installation
dans un véhicule, comprenant :
un moteur électrique (7) ;
une bobine (5) qui est capable d'enrouler et de dérouler une ceinture de sécurité (3) pour retenir un occupant en association avec l'entraînement dudit moteur électrique ; et
un moyen de commande (20) qui commande l'entraînement dudit moteur électrique, dans lequel :
ledit moyen de commande a un mode de commande dans lequel, lorsque ladite ceinture de sécurité est portée par un occupant du véhicule et que le véhicule est manoeuvré en marche arrière, ledit moteur électrique est commandé pour faire tourner ladite bobine afin de dérouler la ceinture de sécurité de manière à réduire la tension agissant sur la ceinture de sécurité.

2. Enrouleur de ceinture de sécurité selon la revendication 1, dans lequel :
ledit moyen de commande dans ledit mode de commande commande l'entraînement du moteur pour former une région insensible quant à la force de retenue appliquée sur l'occupant du véhicule par ladite ceinture de sécurité.

3. Appareil pour ceinture de sécurité pour installation dans un véhicule, comprenant :
un enrouleur de ceinture de sécurité selon la revendication 1 ou 2,
une ceinture de sécurité (3) pour retenir un occupant, qui peut être portée par un occupant de véhicule ;
une boucle de ceinture de sécurité (16) fixée au véhicule,
une languette (12) qui est fixée à ladite ceinture de sécurité et est verrouillée à ladite boucle de ceinture de sécurité lorsque ladite ceinture de sécurité est portée, et
un capteur de détection de boucle (16a) détectant que ladite languette est verrouillée à ladite boucle de ceinture de sécurité, dans lequel :
ledit moyen de commande a un mode de commande dans lequel, lorsqu'il est déterminé en se basant sur les informations détectées dudit capteur de détection de boucle que ladite ceinture de sécurité est portée par un occupant d'un véhicule et que le véhicule est manoeuvré en marche arrière, ledit moteur électrique est commandé pour faire tourner ladite bobine afin de dérouler la ceinture de sécurité de manière à réduire la tension agissant sur la ceinture de sécurité.

4. Appareil pour ceinture de sécurité selon la revendication 3, dans lequel :
ledit moyen de commande dans ledit mode de commande commande l'entraînement du moteur pour former une région insensible quant à la force de retenue appliquée à l'occupant du véhicule par ladite ceinture de sécurité.

5. Véhicule comprenant un appareil pour ceinture de sécurité (100) selon la revendication 3 ou la revendication 4 et comprenant en outre un appareil de réglage (50) qui est réglé sur un état de réglage inverse par l'occupant du véhicule lors d'une manoeuvre en marche arrière du véhicule, et un moyen de détection (52) pour détecter que ledit appareil de réglage est réglé à l'état de réglage inverse, dans lequel :
ledit moyen de commande dudit appareil pour ceinture de sécurité est adapté pour déterminer que ledit véhicule est manoeuvré en marche arrière lorsque ledit moyen de détection détecte que l'appareil de réglage est réglé à l'état de réglage inverse et commande dans ledit mode de commande la tension agissant sur ladite ceinture de sécurité pour qu'elle soit inférieure à la tension de la ceinture de sécurité au moment où l'on détecte que l'appareil de réglage est réglé à l'état de réglage inverse.
